Europäisches Patentamt

European Patent Office

Office européen des brevets

(19)

(11) Numéro de publication: **0 017 553**
**B1**

(12) **FASCICULE DE BREVET EUROPEEN**

(45) Date de publication du fascicule du brevet: **15.02.84**

(51) Int. Cl.³: **H 04 N 5/84, G 06 F 15/20**

(21) Numéro de dépôt: **80400387.9**

(22) Date de dépôt: **21.03.80**

(54) Système de visualisation d'images numériques, notamment pour leur reproduction par photographie, comportant un dispositif de correction des demi-teintes.

(30) Priorité: **23.03.79 FR 7907389**

(43) Date de publication de la demande:
**15.10.80 Bulletin 80/21**

(45) Mention de la délivrance du brevet:
**15.02.84 Bulletin 84/7**

(84) Etats contractants désignés:
**DE GB NL**

(56) Documents cités:
**THE ROYAL TELEVISION SOCIETY JOURNAL, vol. 14, no. 11, septembre/octobre 1973, Londres. GB, BALDWIN: "The digital television studio center", pages 261-263**
**PROCEEDINGS OF THE NATIONAL ELECTRONICS CONFERENCE, no. 24, 9-11 décembre 1968, Oak Brook, USA, GUIGNON et al."Typical results from an on-line image processing system", pages 8-13**
**"Digital Image Processing" W.K. Pratt publié en 1978 par Wiley-Interscience,pages 447-452**

(73) Titulaire: **THOMSON-CSF**
**173, Boulevard Haussmann**
**F-75379 Paris Cedex 08 (FR)**

(72) Inventeur: **Klausz, Rémy**
**"THOMSON-CSF" - SCPI 173, Bld Haussmann**
**F-75360 Paris Cedex 08 (FR)**

(74) Mandataire: **Thrierr, Françoise et al,**
**THOMSON-CSF SCPI 173, Bld Haussmann**
**F-75379 Paris Cedex 08 (FR)**

Courier Press, Leamington Spa, England.

## Système de visualisation d'images numériques, notamment pour leur reproduction par photographie, comportant un dispositif de correction des demi-teintes

La présente invention concerne un système de visualisation d'images numériques utilisable par exemple en tomodensitométrie comportant un dispositif de correction des demi-teintes. Ce dispositif de correction est particulièrement utile lorsque les images visualisées, à partir des images numériques stockées dans une mémoire, doivent être enregistrées par photographie sur des films.

Il est maintenant classique, dans divers domaines, de disposer d'images numériques stockées dans des mémoires sous forme de mots numériques, binaires par exemple, et de vouloir convertir ces images numériques en images analogiques visibles par exemple sur l'écran d'un tube à rayons cathodiques. Une image numérique, obtenue par des moyens qui ne seront par décrits ici, est, au moins en partie, stockée dans une mémoire, sous forme d'un certain nombre de mots numériques, chaque mot correspondant à un point de l'image et pouvant avoir une parmi N valeurs. Les images numériques sont extraites mot pair mot de la mémoire et sont, éventuellement après traitement, converties dans un convertisseur numérique analogique en un signal qui est mis en forme et appliqué à un moniteur de visualisation à tube à rayons cathodiques.

Il est important de noter que l'ensemble de la chaîne allant de la mémoire à l'entrée du moniteur de visualisation, est linéaire, sauf en ce qui concerne le module de traitement proprement dit qui, lui, peut ne pas être linéaire. Ceci signifie que la fonction de transfert de cette chaîne est linéaire: les différents N niveaux que peut prendre chaque mot de l'image numérique, seront convertis, en au plus N niveaux proportionnels destinés à être visualisés sur le tube à rayons cathodiques. Par contre des non linéarités apparaissent tant au niveau du moniteur lui-même, et notamment du tube à rayons cathodiques, qu'au niveau du détecteur qui "voit" cette image, que ce détecteur soit l'oeil, ou que ce soit le film d'un appareil de photographie.

Il est connu que la non-linéarité du tube à rayons cathodiques compense en partie la non linéarité de la courbe de réponse de l'oeil. Ceci n'est par contre plus vrai lorsque le tube à rayons cathodiques est "vu" par le film d'un appareil photographique. Les films utilisés ont en effet des caractéristiques sensitométriques qui ne sont pas linéaires en fonction du niveau de l'image, et ce d'autant plus que les films utilisés ne sont généralement pas inversibles et qu'il est nécessaire d'effectuer une inversion électrique préalable du signal vidéo. Cette inversion peut être faite soit dans le moniteur lui-même s'il n'est destiné qu'à l'usage photographique soit, si c'est un moniteur standard, par un circuit d'inversion du signal disposé immédiatement avant l'entrée du moniteur.

Il est connu dans l'état actuel de la technique d'agir, autant que faire se peut, sur ce phénomène néfaste, en modifiant les réglages de lumière et de contraste du moniteur de visualisation. Ces réglages sont malheureusement difficiles à effectuer et devraient, de plus, être refaits chaque fois que l'on change de type de film. En effet les différents types de film ne présentent pas les mêmes caractéristiques sensitométriques.

Il est par ailleurs connu dans certaines techniques, de réaliser des corrections tenant compte de la fonction de transfert irrégulière des films en modifiant les informations numériques données par l'analyse de l'objet dont on veut obtenir l'image, avant même de stocker ces informations dans une mémoire. L'inconvénient majeur de ce type de correction, qui les rend parfaitement inutilisables dans le domaine de la tomodensitométrie par exemple, est que la correction est faite une fois pour toutes et qu'il n'est plus possible de retrouver les informations analysées. Si ceci peut être utile pour des images qui seront systématiquement enregistrées sur des films, et toujours sur le même type de films, cela n'est plus du tout utilisable dans des applications où l'on veut soit enregistrer les images sur des films, soit les regarder directement sur un écran de visualisation.

Enfin, une publication américains de Wiley-Interscience, 1978, par W. K. Pratt montre qu'il est connu d'effectuer certaines corrections sur une image représentée par des informations numériques permettant de la reconstituer.

L'objet de la présente invention est un dispositif de correction de ce type de phénomène, qui permet d'une part d'effectuer la correction en fonction des différentes non linéarités des détecteurs sensibles à l'image obtenue sur le tube à rayons cathodiques, et d'autre part permet de conserver dans le mémoire les informations relatives à l'image numérique sous une forme brute.

Pour cela un dispositif de correction conforme à l'invention comporte au moins une mémoire de linéarisation contenant une table de transposition des informations qu'elle reçoit, fonction des non-linéarités à corriger, cette mémoire effectuant la correction au fur et à mesure qu'elle reçoit les informations et qu'elle les transmet au convertisseur numérique analogique. En d'autres termes les informations brutes sont conservées intactes, tandis que les informations transmises au convertisseur numérique analogique sont corrigées "au vol", c'est-à-dire au fur et à mesure qu'elles sont nécessaires pour élaborer sur le moniteur de visualisation l'image à observer.

Plus précisément, l'invention concerne un système de visualisation d'images numériques du type comportant au moins un tube à rayon cathodique pour l'observation directe desdites images et un moyen de prises de vue photographiques pour relever une image particulière sur ledit tube à rayon cathodique à un moment choisi, une mémoire de rafraîchissement dans laquelle sont sans cesse réactualisées les informations numériques brutes représentatives d'une succession d'images et des moyens de conversion numérique-analogique connectés entre ladite mémoire de rafraîchissement et ledit tube à rayon cathodique, caractérisé en ce qu'il comporte une mémoire de linéarisation, connue en soi, insérée, au moins au moment d'une prise de vue photographique, en un point de la chaîne de traitement numérique entre la sortie de ladite mémoire de rafraîchissement et l'entrée dudit convertisseur numérique-analogique, ladite mémoire étant adaptée au type de film utilisé.

Ce dispositif de correction selon l'invention est particulièrement utile lorsqu'il s'agit de mémoriser sur des films les images obtenues sur le moniteur de visualisation.

Il permet également de réaliser des corrections différentes sur différentes voies de visualisation, ce qui permet notamment d'effectuer des corrections appropriées aux différents détecteurs (oeil, film) qui "voient" l'écran du moniteur de visualisation.

D'autres objets caractéristiques et résultats de l'invention ressortiront de la description suivante donnée à titre d'exemple non limitatif, et illustrée par les figures annexées qui représentent:
— la figure 1, un schéma synoptique d'un système de visualisation de l'art antérieur, sur lequel n'ont été représentés que les éléments essentiels à la compréhension de l'invention;
— la figure 2, un schéma synoptique simplifié permettant de comprendre le fonctionnement du dispositif de correction de l'invention, applicable à différents domaines;
— les figures 3 et 4, des schémas synoptiques de deux variantes de réalisation du dispositif de correction de l'invention, dans une application à la tomodensitométrie.

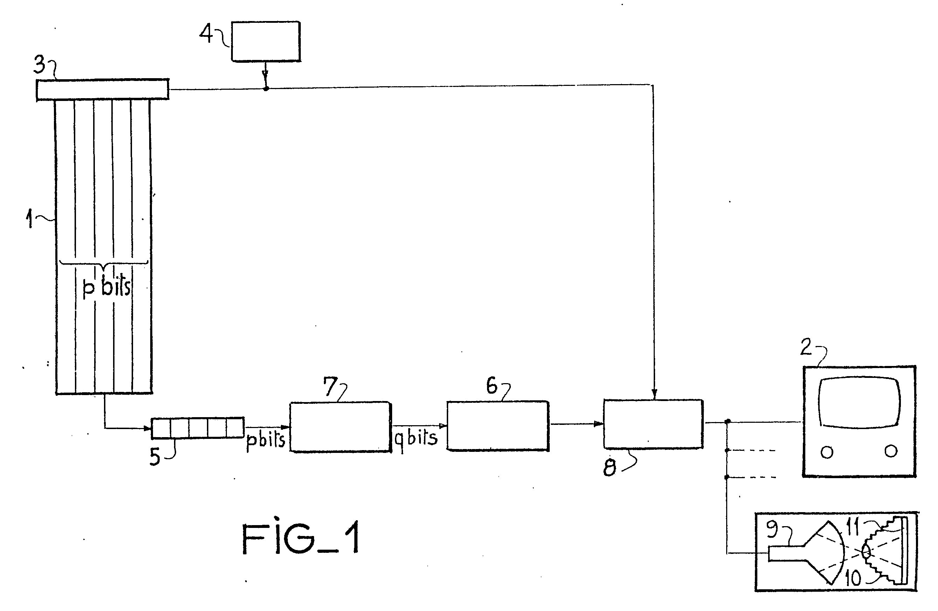

On voit sur la figure 1 les éléments essentiels d'un système de visualisation d'images numériques dans le cas par exemple de visualisation d'images tomodensitométriques, constituant l'art antérieur de la présente invention.

Les images numériques, obtenues par des moyens bien connus maintenant, sont chacune constituées de P mots numériques disposés, séquentiellement par exemple, dans une mémoire schématiquement représentée en 1 sur la figure 1. Les P mots numériques de chaque image qui correspondent aux P points analysés peuvent avoir chacun une parmi N valeurs correspondant aux N niveaux qu'il s'agit de représenter. Le système numérique utilisé étant généralement le système binaire, les N valeurs possibles de chaque point seront codées sur par exemple p bits.

La mémoire 1 représentée ici est une mémoire dite de rafraîchissement. Elle contient donc les P mots numériques qui devront périodiquement être envoyés vers le moniteur de visualisation pour que l'image sur ce moniteur reste en permanence malgré la non rémanence du type à rayons cathodiques. Le moniteur de visualisation 2 étant un récepteur du type télévision, la mémoire de rafraîchissement représentée en 1 a pour caractéristique principale de pouvoir donner accès à toutes les valeurs qui y sont stockées en un temps inférieur ou égal à la durée d'une trame de télévision.

Un contrôleur 3 synchronisé par les signaux d'une horloge 4 envoie successivement toutes les valeurs de l'image, dans l'ordre nécessaire à la visualisation, dans une mémoire tampon 5 pouvant contenir de un à plusieurs mots. Une telle mémoire tampon peut par exemple contenir jusqu'à une ligne d'image. Une image est en effet classiquement constituée de mots disposés en lignes et en colonnes.

Il est connu, lorsqu'il s'agit de visualiser des images tomodensitométriques, de réaliser sur l'image numérique, au fur et à mesure de sa transmission de la mémoire tampon vers le convertisseur numérique analogique 6, un certain nombre de traitements. Un tel traitement consiste par exemple dans l'opération bien connue de fenêtrage, la fenêtre pouvant être variable tant en largeur qu'en position. Cette opération de fenêtrage réduira par exemple les mots de p bits en mots de q bits, q étant inférieur à p. Les valeurs numériques résultant de ces traitements sortent du module de traitement 7 à la même cadence que les mots qui entrent, codées sur seulement q bits; un exemple classique de cette opération est d'avoir p=12 et q=8.

Chaque valeur sortant du module de traitement 7 est alors convertie en signal analogique dans le convertisseur numérique analogique 6, et mise en forme, en synchronisme avec l'horloge 4, dans des circuits de mise en forme 8 pour former un signal vidéo exploitable par un ou plusieurs téléviseurs pouvant servir à l'observation visuelle et/ou à la photographie. Le signal vidéo délivré par les circuits de mise en forme 8 est ici appliqué d'une part à un moniteur 2 sur lequel l'image peut être directement observée, et d'autre part à un moniteur dont le tube à rayons cathodiques 9 est "vu" par un appareil photographique 10 comportant un film 11 sur lequel l'image va être enregistrée.

Les inconvénients d'un tel système de visualisation de l'art antérieur ont été décrits dans le préambule de la présente description.

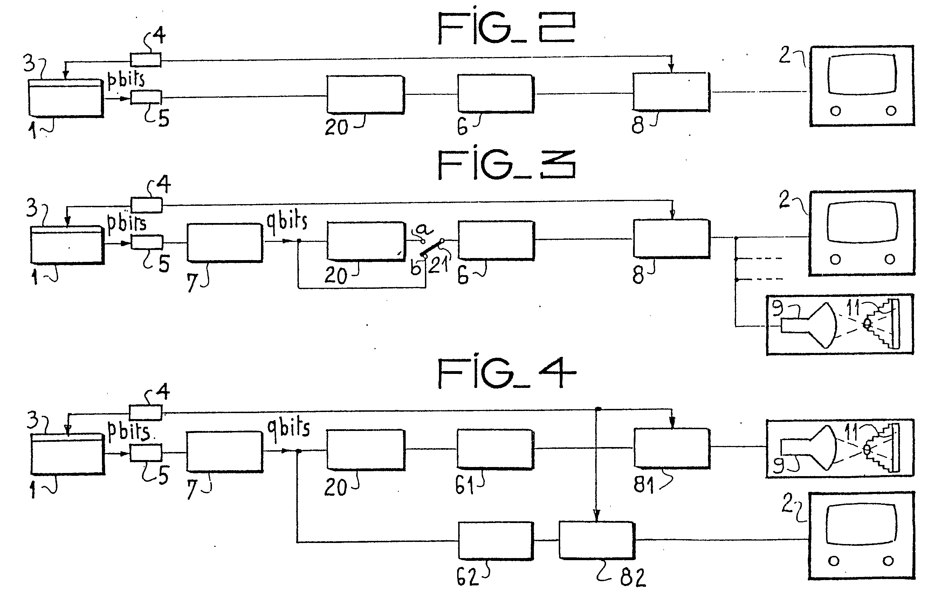

La figure 2 représente sous forme synoptique le schéma de principe d'un système de visualisation comportant un dispositif de correction conforme à l'invention.

**0 017 553**

Il est à noter que dans les figure 2 à 4 les mêmes repères que ceux de la figure 1 correspondent aux mêmes éléments.

Dans l'exemple de réalisation donné à la figure 2, le système de visualisation n'est pas nécessairement utilisé dans un tomodensitomètre; c'est pourquoi n'a pas été représenté le module de traitement 7 décrit à l'occasion de la figure 1. En effet le dispositif de correction de l'invention peut être utilisé dans d'autres applications que la tomodensitométrie, et notamment dans des applications où il n'est pas nécessaire d'effectuer un traitement avant de convertir l'image numérique; l'invention est notamment utilisable chaque fois qu'il s'agit de visualiser des images médicales, obtenues par exemple par ultrasons.

L'invention consiste essentiellement, connaissant la courbe de non linéarité qui affecte l'image entre la sortie du circuit 8 de mise en forme et la perception qu'a de cette image le détecteur qui "voit" l'écran du tube à rayons cathodiques utilisé pour la visualisation, que ce détecteur soit les yeux d'un observateur, ou que ce soit un film photographique, à disposer, après la mémoire de rafraîchissement et la mémoire tampon associée, et avant le convertisseur numérique analogique 6, une mémoire de linéarisation qui va permettre de corriger chaque mot numérique transmis au convertisseur numérique analogique, au fur et à mesure de ce transfert. Cette mémoire peut de plus assurer la fonction d'inversion du signal nécessaire lorsqu'on utilise des films non inversibles, évitant d'avoir à le faire ultérieurement sur le signal analogique.

Il s'agit donc de laisser intactes les informations "brutes" stockées dans la mémoire de rafraîchissement 1, et de réaliser, en temps réel, une correction sur les seules informations qui vont être visualisées.

Ceci va permettre d'une part un gain de temps puisque l'ensemble des informations représentant les différentes images ne sera pas forcément corrigé préalablement à toute visualisation, et va permettre d'autre par de garder intactes les informations brutes correspondant aux différentes images. Ce dernier point est très important puisque, comme il a déjà été mentionné, les corrections à effectuer ne sont pas les mêmes selon qu'il s'agit de voir l'écran du tube à rayons cathodiques directement par un observateur ou de le voir par le moyen d'un film.

La mémoire de linéarisation 20 peut être par exemple une mémoire de type à accès aléatoire (RAM) préalablement chargée, ou de type à lecture seulement (ROM) contenant une table de linéarisation. Cette table de linéarisation comprend N positions si chaque mot de l'image numérique peut avoir N valeurs différentes; les adresses de ces N positions sont les N valeurs que peut prendre chaque point d'image tandis que leurs valeurs sont les au plus N valeurs corrigées pour tenir compte de la non-linéarité précitée. Ainsi, aur fur et à mesure que les différentes valeurs d'image arrivent dans la mémoire de linéarisation 20, elles sont automatiquement dirigées à la bonne adresse et interprétées comme adresse pour extraire de la table la valeur corrigée en fonction de la non-linéarité qui leur correspond. Ces valeurs corrigées sont à leur tour envoyées, au fur et à mesure que se fait la correction, vers le convertisseur numérique analogique 6.

L'exemple de la figure 2 est donné dans un contexte général. Il n'y est pas dit si le moniteur 2 est directement regardé par un observateur ou s'il est regardé par un film photographique. Ce peut être l'un ou l'autre de ces deux cas, la table de linéarisation en dépendant quant aux valeurs qu'elle contient.

Comme il a déjà été dit, la non-linéarité de la courbe de réponse de l'oeil, qui est pratiquement logarithmique, sauf pour les valeurs voisines du noir, est généralement assez bien corrigée par les moniteurs de télévision; cette correction automatique fait que généralement il n'est pas absolument nécessaire de prévoir une mémoire de linéarisation dans un tel cas. Cela peut pourtant être envisagé si l'on désire une très bonne linéarité.

Par contre le rôle de la mémoire de linéarisation 20 est absolument fondamental lorsque l'écran du tube à rayons cathodiques est vu par un appareil photographique à film. Elle permet en effet d'obtenir une courbe sensitométrique corrigeant exactement celle du film, et ceci quel que soit le type de film.

La figure 3 représente le schéma synoptique d'un système de visualisation conforme à l'invention dans une application où l'on souhaite pouvoir observer l'image visualisée soit directement sur un moniteur de type télévision 2, soit par l'intermédiaire d'un film 11 "regardant" un tube à rayons cathodiques 9. L'exemple d'application représenté ici comporte également un module de traitement 7 tel que celui décrit à l'occasion de la figure 1. Ce module de traitement, lorsqu'il s'agit d'un système de visualisation d'images tomodensitométriques, effectue notamment l'opération précitée de fenêtrage et fransforme les mots numériques de p bits en mots numériques de q bits. Dans ce cas la mémoire de linéarisation 20 est connectée dans la chaîne de traitement des informations numériques, entre le module de traitement 7 et le convertisseur numérique analogique 6. Elle contient une table de linéarisation adaptée au film 11. Un commutateur, symboliquement représenté en 21, permet de conncter ou non la mémoire de linéarisation 20 dans la chaîne de visualisation. Lorsque le commutateur 21 est dans la position (a) la mémoire de linéarisation 20 est en circuit, et la correction est réalisée. Dans ce cas l'image enregistrée sur le film 11 est correcte, tandis que celle vue sur le moniteur 2 ne l'est pas. En effet la mémoire de linéarisation 20 contient des corrections destinées au film 11 et non à l'observation par l'oeil. Lorsque l'on veut au contraire ne plus enregistrer l'image sur film, mais la regarder directement sur le moniteur 2, on met le commutateur 21 dans la position (b) de manière à supprimer de la chaîne la mémoire de linéarisation. La commande de ce commutateur peut être par exemple asservie au déclenchement de l'appareil de prise de vue, l'image étant linéairsée pendant un temps égal ou légèrement supérieur au temps de pose.

Dans l'exemple illustré ici, on dispose de deux moniteurs distincts, l'un (2) pour l'observation directe, l'autre (9) pour la photographie. Il est clair que l'invention s'applique aussi bien au cas où le système de visualisation comporte un seul moniteur utilisable soit en observation directe (mémoire 20 non reliée), soit en mode photographie (mémoire 20 en service).

La figure 4 représente une variante du système de la figure 3, dans laquelle les deux observations, directe sur le moniteur 2, et par l'intermédiaire d'un film 11, peuvent être réalisées simultanément. Pour cela la chaîne de visualisation se divise, à la sortie du module de traitement 7, en deux voies. Une première voie qui est la voie photo, comporte la mémoire de linéarisation 20 qui envoie ses informations vers un premier convertisseur numérique analogique 61. Les valeurs corrigées en fonction du film 11 sont, après mise en forme dans un premier circuit 81, envoyées au tube 9 pour enregistrement sur le film 11.

La deuxième voie, ou voie d'observation directe, ne comporte pas de mémoire de linéarisation puisqu'il a été dit que ceci n'était pas indispensable, et comporte un deuxième convertisseur numérique analogique 62 qui alimente un deuxième circuit de mise en forme 82 dont les signaux de sortie sont appliqués au moniteur de visualisation 2.

On dispose ainsi simultanément d'une voie corrigée pour la photo et d'une voie non corrigée pour la visualisation directe. On peut ainsi à tout moment photographier les images visualisées, sans être dérangé dans l'observation visuelle.

Il est encore intéressant de noter que le dispositif de correction de l'invention permet d'utiliser différents types de films tout en réalisant de façon correcte les différentes corrections correspondantes. Il est clair que pour obtenir ainsi différentes corrections, il faut pouvoir changer la table de linéarisation contenue dans la mémoire 20. Différentes variantes sont possibles pour cela.

Dans une première variante la mémoire de linéarisation 20 est constituée par un module facilement interchangeable par l'utilisateur, par exemple enfichable. Ainsi on change le module chaque fois que l'on change de film.

Une autre variante consiste à placer d'emblée les différentes modules relatifs à tous les types de films susceptibles d'être utilisés, l'opérateur sélectionnant par un moyen volontaire (commande par sélecteur, boutons, ou par ordre en caractère alpha-numériques frappés sur un clavier connecté au calculateur gérant l'ensemble) le module adapté au type de film utilisé.

Une autre variante encore consiste à rendre cette sélection automatique. Ceci peut être fait par des moyens actionnés par la cassette contenant le film, tels qu'un interrupteur manoeuvré par un picot ou une encoche, ou un sélecteur optique (code en barres par exemple), ou même pour éviter tout risque, de rendre ces moyens solidaires du film lui-même: encoche sur un côté du film par exemple, la détection pouvant rester mécanique ou optique dans une bande de longueur d'onde ne risquant pas d'impressionner le film (par exemple infra-rouge).

**Revendications**

1. Système de visualisation d'images numériques du type comportant au moins un tube à rayon cathodique (2, 9) pour l'observation directe desdites images et un moyen de prises de vue photographiques (11) pour relever une image particulière sur ledit tube à rayon cathodique à un moment choisi, une mémoire de rafraîchissement (1) dans laquelle sont sans cesse réactualisées les informations numériques brutes représentatives d'une succession d'images et des moyens de conversion numérique-analogique connectés entre ladite mémoire de rafraîchissement et ledit tube à rayon cathodique, caractérisé en ce qu'il comporte une mémoire de linéarisation (20), connue en soi, insérée au moins au moment d'une prise de vue photographique en un point de la chaîne de traitement numérique entre la sortie de ladite mémoire de rafraîchissement et l'entrée dudit convertisseur numérique-analogique ladite mémoire étant adaptée au type de film utilisé pour la prise de vué.

2. Système de visualisation selon la revendication 1, caractérisé en ce qu'il comporte deux tubes à rayon cathodique ou analogue, le premier (2) étant destiné à la visualisation directe desdites images et le second (9) étant associé audit moyen de prises de vue photographique (11), caractérisé en ce que les deux tubes à rayon cathodique sont tous deux reliés à la sortie dudit convertisseur numérique-analogique (6) et qu'un moyen de neutralisation (21) de ladite mémoire de linéarisation (20) est agencé dans ladite chaîne de traitement numérique entre ladite mémoire de rafraîchissement (1) et ledit convertisseur numérique-analogique.

3. Système de visualisation selon la revendication 1, caractérisé en ce qu'il comporte deux tubes à rayon cathodique ou analogue, le premier (2) étant destiné à la visualisation directe desdites images et le second (9) étant associé audit moyen de prises de vue photographiques (11), caractérisé en ce qu'il comporte deux convertisseurs numérique-ana-

logique dont les sorties sont reliées respective-
ment aux deux tubes à rayon cathodique ou
analogue et en ce que ladite mémoire de
linéarisation (20) est insérée en amont du convertisseur (61) associé audit second tube à
rayon cathodique (9).

## Patentansprüche

1. System zur Sichtbarmachung digitaler
Bilder, mit mindestens einer Kathodenstrahlröhre (2, 9) für die direkte Betrachtung dieser
Bilder, mit einem photographischen Aufnahmemittel (11) zur Aufnahme eines
bestimmten Bildes zu einem ausgewählten Zeitpunkt von der Kathodenstrahlröhre, mit einem
Auffrischungsspeicher (1), in dem ununterbrochen die digitalen Rohinformationen, die
eine Bildfolge betreffen, aktualisiert werden,
und mit Mitteln zur Digital-Analog-Umwandlung, die zwischen den Auffrischungsspeicher und die Kathodenstrahlröhre eingefügt sind, dadurch gekennzeichnet, daß das
System einen an sich bekannten Linearisierungsspeicher (20) aufweist, der zumindest im
Zeitpunkt einer photographischen Aufnahme an
einem Punkt in die digitale Verarbeitungskette
zwischen den Ausgang des Auffrischungsspeichers und den Eingang des Digital/Analogwandlers eingefügt ist, wobei der Speicher dem
für die Aufnahmen verwendeten Filmtyp
angepaßt ist.

2. System zur Sichtbarmachung nach Anspruch 1, dadurch gekennzeichnet, daß es zwei
Kathodenstrahlröhren oder ähnliche Anordnungen aufweist, von denen die erste (2) zur
direkten Sichtbarmachung der Bilder bestimmt
ist und die zweite (9) dem photographischen
Aufnahmemittel (11) zugeordnet ist, dadurch
gekennzeichnet, daß die beiden Kathodenstrahlröhren gemeinsam an den Ausgang des
Digital/Analogwandlers (7) angeschlossen sind
und daß ein Mittel (21) zur Neutralisation des
Linearisierungsspeichers (20) in der digitalen
Verarbeitungskette zwischen dem Auffrischungsspeicher (1) und dem Digital/Analogwandler angeordnet ist.

3. System zur Sichtbarmachung nach Anspruch 1, dadurch gekennzeichnet, daß es zwei
Kathodenstrahlröhren oder ähnliche Anordnungen aufweist, von denen die erste (2) zur
direkten Sichtbarmachung der Bilder bestimmt
ist und die zweite (9) dem photographischen
Aufnahmemittel (11) zugeordnet ist, dadurch
gekennzeichnet, daß das System zwei Digital/Analogwandler aufweist, deren Ausgänge mit je einer der Kathodenstrahlröhren
oder ähnlichen Anordnung verbunden sind,
und daß der Linearisierungsspeicher (20) vor
dem der zweiten Kathodenstrahlröhre (9) zugeordneten Wandler (61) eingefügt ist.

## Claims

1. A system for visualizing digital images,
comprising at least one cathode ray tube (2, 9)
permitting the direct observation of these
images, a means (11) for taking a photograph of
a particular image at a chosen instant from said
cathode ray tube, a refreshing memory (1) in
which the raw digital informations representing a succession of images are constantly re-
actualized, and means for a digital-to-analog
conversion which are connected between said
refreshing memory and said cathode ray tube,
characterized in that the system comprises a
linearisation memory (20), known per se, which,
at least at the instant when a photograph is
taken, is inserted at a point of the digital processing chain between the output of said refreshing memory and the input of said digital-
to-analog converter, that memory being
adapted to the type of film used for the photograph.

2. A system according to claim 1, characterized in that it comprises two cathode ray
tubes or similar means, the first one (2) being
conceived to visualize directly said images and
the second one (9) being associated to the
means for taking photographs (11), characterized in that the two cathode ray tubes are
both connected to the output of said digital-to-
analog converter (6) and that a neutralization
means (21) of said linearisation memory (20) is
arranged in said digital processing chain
between said refreshing memory (1) and said
digital-to-analog converter.

3. A system according to claim 1, characterized in that it comprises two cathode ray
tubes or similar means, the first one (2) being
conceived to directly visualize said images and
the second one (9) being associated to the
means for taking photographs (11), characterized in that it comprises two digital-to-analog
converters the outputs of which are respectively connected to the two cathode ray tubes
or similar means, and that said linearisation
memory (20) is inserted upstream of the converter (61) which is associated to the second
cathode ray tube (9).

FIG_1

## FIG_2

pbits

3  4  1  5  20  6  8  2

## FIG_3

pbits  qbits

3  4  1  5  7  20  a  b  21  6  8  2  9  11

## FIG_4

pbits  qbits

3  4  1  5  7  20  61  81  9  11  2

62  82

0017553